(19) **Europäisches Patentamt**

**European Patent Office**

**Office européen des brevets**

(11) **EP 0 898 166 B1**

(12) **EUROPÄISCHE PATENTSCHRIFT**

(45) Veröffentlichungstag und Bekanntmachung des Hinweises auf die Patenterteilung:
**12.01.2000 Patentblatt 2000/02**

(51) Int Cl.$^7$: **G01N 27/411**

(21) Anmeldenummer: **98115216.8**

(22) Anmeldetag: **13.08.1998**

(54) **Verfahren und Vorrichtung zur Messung des Sauerstoffpotentials in einer Siliciumschmelze**

Method and device for measuring the oxygen potential in a silicon melt

Méthode et appareil pour la mesure de l'activité d'oxygen dans le silicium fondu

(84) Benannte Vertragsstaaten:
**DE FR GB IT**

(30) Priorität: **21.08.1997 DE 19736469**

(43) Veröffentlichungstag der Anmeldung:
**24.02.1999 Patentblatt 1999/08**

(73) Patentinhaber: **Wacker Siltronic Gesellschaft für Halbleitermaterialien Aktiengesellschaft 84489 Burghausen (DE)**

(72) Erfinder:
• **Müller, Georg Prof. Dr. 91094 Langensendelbach (DE)**
• **Seidl, Albrecht Dr. 91058 Erlangen (DE)**

(74) Vertreter: **Rimböck, Karl-Heinz, Dr. et al c/o Wacker-Chemie GmbH Zentralabteilung PML Hans-Seidel-Platz 4 81737 München (DE)**

(56) Entgegenhaltungen:
**EP-A- 0 635 718          EP-A- 0 696 652
US-A- 4 313 799**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur Messung des Sauerstoffpotentials in einer Siliciumschmelze mittels einer elektrochemischen Potentialsonde, die in die Schmelze eintaucht.

Bei vielen Verfahren zur Herstellung elektronischer Bauelemente mit hoher Packungsdichte aus Siliciumscheiben spielt der Sauerstoffgehalt des Siliciums eine wichtige Rolle. Der Grund liegt darin, daß bei bestimmten Prozeßschritten immer häufiger auf die intrinsische Getterwirkung des Sauerstoffs zurückgegriffen wird. In der Mikroelektronik wird daher nahezu ausschließlich einkristallines Silicium eingesetzt, das einen Sauerstoffgehalt von etwa $10^{16}$ Atomen O/cm$^3$ aufweist.

Derartiges Silicium wird beim Tiegelziehen nach Czochralski erhalten, da sich im Verlauf des Ziehvorgangs durch die Reaktion zwischen der Siliciumschmelze und dem Quarztiegel Sauerstoff in der Schmelze anreichert und in den wachsenden Kristallstab eingebaut wird. Die an der Kristallwachstumsgrenzfläche vorliegende Sauerstoffkonzentration findet sich in etwa in dieser Größenordnung im Kristall wieder.

Im Verlauf des Ziehvorgangs ändert sich jedoch die Sauerstoffkonzentration in der Schmelze wegen des absinkenden Schmelzenniveaus und der damit verbundenen Veringerung der Kontaktfläche zwischen Schmelze und Quarztiegel. Darüber hinaus sind die thermischen Bedingungen, die die Reaktion zwischen Tiegel und Schmelze wesentlich beeinflussen, nicht konstant.

Stand der Technik ist, durch Infrarotabsorptionsmessungen gemäß ASTM-Norm F120/F121 den Sauerstoffgehalt eines in einer bestimmten Ziehanlage fertig gezogenen Siliciumstabes zu ermitteln und mit Referenzwerten zu vergleichen. Für den darauf folgenden Ziehvorgang werden dann die Parameter nachjustiert, die den Sauerstoffeinbau beeinflussen.

Parameter, durch die der Sauerstoffeinbau in Siliciumstäben beeinflußt werden kann, sind Tiegel- und/oder Kristallrotation, Tiegelheizleistung, Kammerdruck und die Durchflußleistung des Inertgasstroms:

    1) die Reaktion zwischen Siliciumschmelze und Quarztiegel und damit die Konzentration an gelöstem Sauerstoff in der Schmelze läßt sich durch eine Erhöhung oder Senkung der Tiegel- und/oder Kristallrotation und der Tiegelheizleistung steuern,
    2) das Verhältnis zwischen gelöstem Sauerstoff und gasförmigem SiO in bzw. über der Schmelze läßt sich durch Variation des Kammerdrucks steuern,
    3) die Konzentration an gasförmigem SiO über der Schmelze läßt sich durch die Durchflußleistung des Inertgasstroms steuern.

Da diese Parameter nur nachjustiert, nicht aber für einen Regelkreis verwendet werden können, ist eine homogene axiale und radiale Sauerstoffverteilung sowie ein definierter Sauerstoffgehalt weder über die gesamte Kristallänge noch über mehrere Kristallstäbe hinweg zu erreichen.

In der EP 0 696 652 A2 wird von einer elektrochemischen Potentialsonde zur Messung der Sauerstoffpotentiale in Siliciumschmelzen berichtet. Die Sonde besteht aus einem ein Metall-/Metalloxid-Gemisch einschließenden, abgeschlossenen SiO$_2$- Glasröhrchen, welches mit einem Metalldraht kontaktiert ist. Als Referenzgemische (Metall/Metalloxid) werden meist Übergangsmetalle, beispielsweise Ti, V, Cr, Mn, Fe, Co und Ni eingesetzt.
Die Diffusionskoeffizienten dieser Metalle in Quarzglas betragen bei einer Temperatur von 1420 °C (Schmelztemp. von Si) bis zu $10^{-4}$ cm$^2$/s (R. Brückner; Properties and Structure of vitreous Silica II, J. Non-crystalline Solids 5 (1971) 177).

Bei einem längeren Einsatz (> 1 min) derartig aufgebauter Potentialsonden ist mit einer zunehmenden fremdmetallischen Kontamination der Schmelze zu rechnen. Wünschenswert ist aber der Einsatz einer Potentialsonde über die gesamte Dauer des Ziehvorgangs, da aus den so bestimmten Sauerstoffkonzentrationen - durch Messung der Sauerstoffpotentiale - ein Regelkreis, durch Veränderung der oben genannten Parameter, aufgebaut werden kann.

Aufgabe der Erfindung war es daher, ein Verfahren und eine Vorrichtung zur Durchführung des Verfahrens anzugeben, das es ermöglicht, während der gesamten Dauer des Czochralski-(Tiegel)-Ziehvorgangs den Sauerstoffgehalt der Schmelze kcntaminationsfrei, durch Messung des Sauerstoffpotentials zu bestimmen, insbesondere, um diese Werte für einen Regelkreis zu verwenden, der es ermöglicht, Siliciumeinkristalle mit einer homogenen axialen und radialen Sauerstoffverteilung herzustellen.

Gelöst wird die Aufgabe durch ein Verfahren zur Messung eines Sauerstoffpotentials in einer Siliciumschmelze mittels einer in die Siliciumschmelze eintauchenden, elektrochemischen Potentialsonde durch Abgreifen einer Sondenspannung zwischen der Schmelze, die beispielsweise durch einen aus der Siliciumschmelze gezogenen Siliciumkristall während des Ziehens des Kristalls kontaktiert ist, und der Potentialsonde, wobei die Sondenspannung durch das Verhältnis von Schmelzen-Sauerstoffpotential und einem bekannten Referenz-Sauerstoffpotential in der Sonde bestimmt wird, dadurch gekennzeichnet, daß die Sondenspannung mit einer Potentialsonde gemessen wird, die aus einem SiO$_2$-Glasröhrchen besteht, in dem sich Graphit in direktem Kontakt mit SiO$_2$-Glas, befindet, welcher am oberen Ende mit einem Metalldraht kontaktiert ist, und die Sonde nur soweit in die Siliciumschmelze eingetaucht wird, daß der von dem SiO$_2$-Glasröhrchen eingeschlossene Kontaktpunkt zwischen Graphit und Metalldraht oberhalb der Siliciumschmelze liegt.
Ferner wird die Aufgabe durch eine Vorrichtung gemäß dem unabhängigen Vorrichtungsanspruch gelöst.

Die Verwendung von Graphit in Kontakt mit $SiO_2$-Glas zur Erzeugung eines Referenz-Sauerstoffpotentials bei dem erfindungsgemäßen Verfahren hat eine Reihe von Vorteilen. So reduziert sich die Gesamtzahl der am Tiegelzieh-Prozeß beteiligten Materialien auf ein Minimum, d.h. es befinden sich nur Kohlenstoff, Silicium und Sauerstoff im kritischen Schmelzenbereich. Kohlenstoff wird in jedem Fall über den Graphit-Stütztiegel durch den Quarztiegel hindurch und über die CO-haltige Atmosphäre in die Schmelze eingetragen. Dem Fachmann ist aber bekannt, daß in Siliciumeinkristallen eingebauter Kohlenstoff aufgrund der elektronischen Verhältnisse nicht zu den Qualitätseinbußen führt, wie sie durch Fremdmetalle entstehen.

Der den Graphit am oberen Ende kontaktierende Metalldraht scheidet als Quelle für eine Fremdmetallkontamination aus, da der Kontaktpunkt oberhalb des in die Schmelze eintauchenden Bereichs der Sonde liegt.

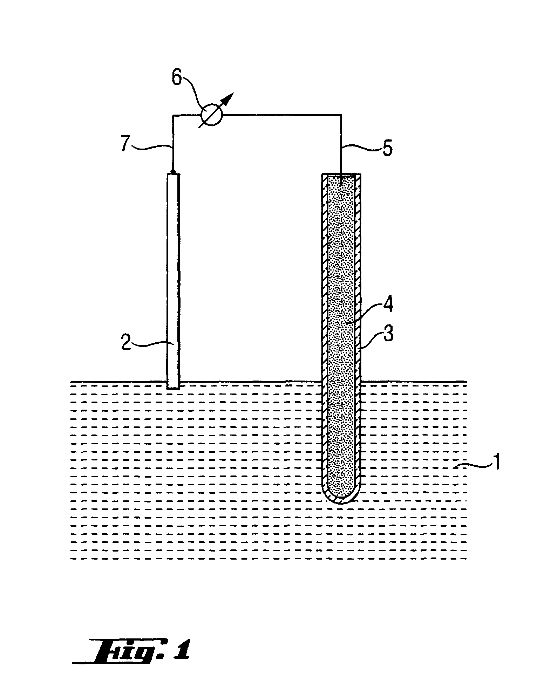

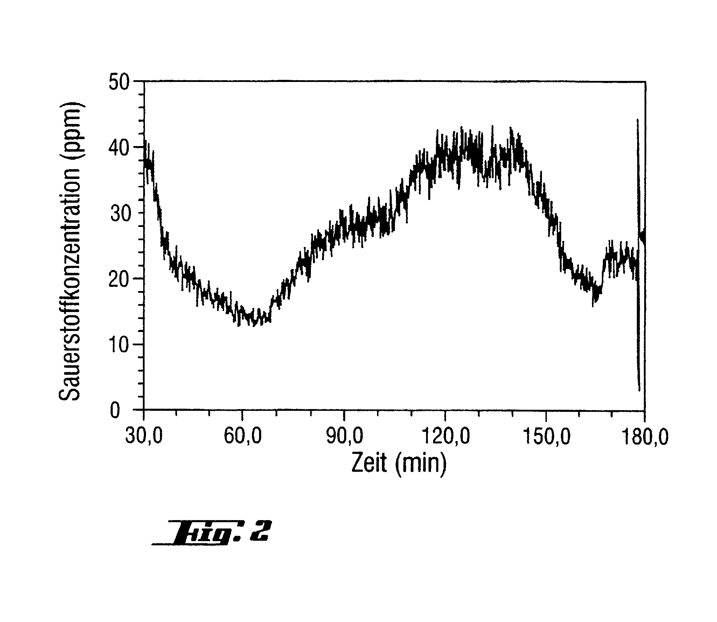

Im Folgenden wird an Hand einer Figur (Fig.1) eine Vorrichtung beschrieben, mit der das erfindungsgemäße Verfahren durchgeführt werden kann. Bei der schematisch gezeigten Vorrichtung handelt es sich um eine mögliche Ausführungsform. Eine zweite Figur (Fig. 2) zeigt den mit der Vorrichtung bestimmten und mit den oben erwähnten Parametern beeinflußten Sauerstoffgehalt der Siliciumschmelze.

Einen wesentlichen Bestandteil der erfindungsgemäßen Vorrichtung bildet die in Fig.1 gezeigte elektrochemische Potentialsonde, die aus einem $SiO_2$-Glasröhrchen 3 besteht, in dem sich Graphit 4 in direktem Kontakt mit $SiO_2$-Glas befindet, welcher am oberen Ende mit einem Metalldraht 5 kontaktiert ist. Ein Schmelzenkontakt 2, beispielsweise ein aus der Siliciumschmelze 1 wachsender Kristallstab, taucht, wie auch die Potentialsonde, in die Siliciumschmelze 1 ein. Der Schmelzenkontakt 2 ist mit einem Metalldraht 7 kontaktiert und, wie der Metalldraht 5 der Potentialsonde, mit dem Spannungsmeßgerät 6 leitend verbunden.

An der Grenzfläche zwischen dem $SiO_2$-Glasröhrchen 3 und dem daran anliegenden Graphit 4 baut sich ein definiertes, temperaturabhängiges Referenz-Sauerstoffpotential auf.

Überraschenderweise wurde gefunden, daß durch die erfindungsgemäße Verwendung von $SiO_2$-Glas und Graphit in Form der beanspruchten Vorrichtung die Sondenspannung exakt zu messen ist und über lange Zeit stabil bleibt. Auch wurde keine fremdmetallische Kontamination der Siliciumschmelze beobachtet.

Bei herkömmlichen elektrochemischen Potentialsonden, die aus einem, ein Metall/Metalloxid einschließendes $SiO_2$-Glasröhrchen bestehen, bilden sich bei hohen Temperaturen Metallsilicate, die schon nach kurzer Zeit zu Abweichungen des Referenz-Sauerstoffpotentials vom jeweiligen theoretischen Metall/Metalloxid-Sauerstoffpotential führen.

Erfindungsgemäß besteht die Vorrichtung aus einem $SiO_2$-Glasröhrchen 3, in dem sich Graphit 4 in direktem Kontakt mit $SiO_2$-Glas befindet, welcher am oberen Ende mit einem Metalldraht 7 kontaktiert ist, so daß das Referenz-Sauerstoffpotential ausschließlich durch die Kombination $SiO_2$/Graphit aufgebaut wird und damit exakt zu messen ist. Das $SiO_2$-Glasröhrchen 3 ist selbst am Zustandekommen des Referenzsauerstoffpotentials beteiligt und dient dabei gleichzeitig als Feststoffelektrolyt.

Der Sauerstoffgehalt bzw. Molenbruch $n_0$ in der Siliciumschmelze berechnet sich aus der Beziehung

$$n_0 = \sqrt{p_r}\, \exp\left(\frac{-2UF\left(-_\Delta G^0\right)}{RT}\right)$$

mit der Sondenspannung U, der Faradaykonstanten F, der Gaskonstanten R, der Temperatur der Siliciumschmelze T, dem Referenzpartialdruck $p_r$ und der freien Lösungsenthalpie von Sauerstoff in einer Siliciumschmelze $\Delta G^0$. Die Sondenspannung U und die Temperatur T werden gemessen; alle anderen Größen sind Konstanten oder mit Hilfe bekannter Meßtechniken zu ermitteln.

In Fig.2 ist die mit der erfindungsgemäßen Vorrichtung bestimmte Sauerstoffkonzentration einer Siliciumschmelze über einen Zeitraum von 180 min dargestellt.

Im Verlauf des Experiments wurde die Tiegelheizleistung variiert, was eine veränderte Sauerstofflöslichkeit in der Schmelze am Tiegel und somit insgesamt eine Variation der Sauerstoffkonzentration der Schmelze zur Folge hat. Die gemessene Variation der Sauerstoffkonzentration korreliert mit diesen Erwartungen. Bei der Anwendung des Verfahrens in einem Regelkreis zur Einstellung einer bestimmten Sauerstoffkonzentration kann neben der Variation der Tiegelheizleistung auch eine Variation der Tiegel- und/oder Kristallrotation, des Kammerdrucks und der Durchflußleistung des Inertgasstroms zur Anwendung kommen oder eine Kombination der oben aufgezählten Maßnahmen.

Mit dem erfindungsgemäßen Verfahren und der Vorrichtung zur Durchführung des Verfahrens läßt sich die Sauerstoffkonzentration einer Siliciumschmelze kontaminationsfrei während der gesamten Dauer des Czochralski-(Tiegel)-Ziehvorgangs bestimmen. Mit Hilfe dieser Meßwerte und der Regelung der Parameter, durch die der Sauerstoffeinbau beeinflußt werden kann, wird die Herstellung von Siliciumeinkristallen mit einer homogenen axialen und radialen Sauerstoffverteilung ermöglicht.

**Patentansprüche**

1. Verfahren zur Messung eines Sauerstoffpotentials in einer Siliciumschmelze mittels einer in die Siliciumschmelze eintauchenden elektrochemischen Potentialsonde durch Abgreifen einer Sondenspannung zwischen der Schmelze, die beispielsweise durch einen aus der Siliciumschmelze gezogenen Siliciumkristall während des Ziehens des Kristalls kontaktiert ist, und der Potentialsonde, wobei die Sondenspannung durch das Verhältnis von Schmelzen-Sauerstoffpotential und einem bekannten ReferenzSauerstoffpotential in der Sonde bestimmt wird, dadurch gekennzeichnet, daß die Sondenspannung mit einer Potentialsonde gemessen wird, die aus einem $SiO_2$-Glasröhrchen besteht, in dem sich Graphit in direktem Kontakt mit $SiO_2$-Glas befindet, welcher am oberen Ende mit einem Metalldraht kontaktiert ist, und die Sonde nur soweit in die Siliciumschmelze eingetaucht wird, daß der von dem $SiO_2$-Glasröhrchen eingeschlossene Kontaktpunkt zwischen Graphit und Metalldraht oberhalb der Siliciumschmelze liegt.

2. Verfahren nach Anspruch 1, dadurch gekennzeichnet, daß Siliciumdioxid durch die Kombination mit Graphit zum Aufbau des Referenz-Sauerstoffpotentials und gleichzeitig als Feststoffelektrolyt eingesetzt wird.

3. Vorrichtung zur Messung eines Sauerstoffpotentials in einer Siliciumschmelze mittels einer in die Siliciumschmelze eintauchenden elektrochemischen Potentialsonde, dadurch gekennzeichnet, daß die Potentialsonde aus einem $SiO_2$-Glasröhrchen besteht, in dem sich Graphit in direktem Kontakt mit $SiO_2$-Glas befindet, welcher am oberen Ende mit einem Metalldraht kontaktiert ist.

4. Vorrichtung nach Anspruch 3, dadurch gekennzeichnet, daß die Innenwand des $SiO_2$-Glasröhrchens mit Graphit in Kontakt steht.

**Claims**

1. Process for measuring an oxygen potential in a silicon melt by means of an electrochemical potential probe dipped into the silicon melt by tapping a probe voltage between the melt, with which contact is for example made through a silicon crystal pulled from the silicon melt as the crystal is being pulled, and the potential probe, the probe voltage being determined by the ratio between the melt oxygen potential and a known reference oxygen potential in the probe, characterized in that the probe voltage is measured using a potential probe which consists of an $SiO_2$ glass tube in which graphite is in direct contact with $SiO_2$ glass and has a wire making contact with it at its upper end, and the probe is dipped into the silicon melt only to an extent such that the graphite/wire contact point contained in the $SiO_2$ glass tube lies above the silicon melt.

2. Process according to Claim 1, characterized in that silicon dioxide is used through the combination with graphite to form the reference oxygen potential and, at the same time, as a solid electrolyte.

3. Device for measuring an oxygen potential in a silicon melt by means of an electrochemical potential probe dipped into the silicon melt, characterized in that the potential probe consists of an $SiO_2$ glass tube in which graphite is in direct contact with $SiO_2$ glass and has a wire making contact with it at its upper end.

4. Device according to Claim 3, characterized in that the inner wall of the $SiO_2$ glass tube is in contact with graphite.

**Revendications**

1. Procédé pour mesurer un potentiel en oxygène dans une masse fondue de silicium au moyen d'une sonde de potentiel électrochimique en immersion dans la masse fondue de silicium par prélèvement d'une tension de sonde entre la masse fondue qui, par exemple, est mise en contact par un cristal de silicium tiré de la masse fondue de silicium pendant l'extraction du cristal et la sonde de potentiel, la tension de sonde étant déterminée dans la sonde par le rapport de potentiel en oxygène de masses fondues et d'un potentiel en oxygène de référence connu, caractérisé en ce que la tension de sonde est mesurée par une sonde de potentiel qui est constituée d'un tube capillaire en verre de $SiO_2$, dans lequel du graphite se trouve en contact direct avec le verre de $SiO_2$, lequel est mis en contact à l'extrémité supérieure avec un fil métallique, et la sonde est immergée dans la masse fondue de silicium seulement dans la mesure où le point de contact, inclus dans le tube capillaire en verre de $SiO_2$, entre le graphite et le fil métallique se situe au-dessus de la masse fondue de silicium.

2. Procédé suivant la revendication 1, caractérisé en ce que le dioxyde de silicium est utilisé par la combinaison avec du graphite pour constituer le potentiel en oxygène de référence et simultanément comme électrolyte solide.

3. Dispositif pour mesurer un potentiel en oxygène dans une masse fondue de silicium au moyen d'une sonde de potentiel électrochimique en immersion dans la masse fondue de silicium, caractérisé en ce que la sonde de potentiel est constituée d'un tube capillaire en verre de $SiO_2$, dans lequel du graphite se trouve en contact direct avec un verre de $SiO_2$, lequel est mis en contact à l'extrémité supérieure avec un fil métallique.

4. Dispositif suivant la revendication 3, caractérisé en ce que la paroi interne du tube capillaire en verre de $SiO_2$ est en contact avec du graphite.

**Fig. 1**

Fig. 2